# EUROPÄISCHE PATENTSCHRIFT

(11) **EP 2 919 086 B1**
(45) Veröffentlichungstag und Bekanntmachung des Hinweises auf die Patenterteilung: **24.07.2019**
(21) Anmeldenummer: 15158022.2
(22) Anmeldetag: 06.03.2015
(51) Int. Cl.: G05B 23/02, G05B 19/05

(54) **SYSTEM ZUR SICHEREN STEUERUNG VON MASCHINEN, ANLAGEN ODER DERGLEICHEN**
SYSTEM FOR SECURE CONTROL OF MACHINES, FACILITIES OR SIMILAR
SYSTÈME DE COMMANDE FIABLE DE MACHINES, INSTALLATIONS OU SIMILAIRES

(30) Priorität: 10.03.2014 DE 102014103135
(43) Veröffentlichungstag der Anmeldung: 16.09.2015
(73) Patentinhaber: Phoenix Contact GmbH & Co. KG, 32825 Blomberg (DE)
(72) Erfinder: Borgmann, Hendrik, 32825 Horn-Bad Meinberg (DE)
(74) Vertreter: Blumbach · Zinngrebe Patentanwälte PartG mbB

(56) Entgegenhaltungen:
- EP-A1- 1 396 963
- US-A1- 2004 210 620
- US-A1- 2004 215 354
- US-B2- 7 369 902

## Beschreibung

Die Erfindung betrifft ein System zur Steuerung von Anlagen, Maschinen oder dergleichen gemäß dem Oberbegriff des Anspruchs 1.

Bei gattungsgemäßen Systemen wird von der Steuerung eine Sicherheitsanforderung ausgelöst, wenn beispielsweise eine Eingangsbaugruppe eine sicherheitsrelevante Statusinformation des an sie angeschlossenen Sensors detektiert. Das Auslösen der Sicherheitsanforderung durch die Steuerung wiederum bewirkt, dass bspw. die Anlage still gelegt, d.h. außer Betrieb genommen wird. Aus Sicherheitsgründen löst nun auch eine Störung der Kommunikation zwischen der Eingangsbaugruppe und der Steuerung eine Sicherheitsanforderung in der Steuerung aus, da bei einer Kommunikationsstörung sicherheitsrelevante Statusinformationen des Sensors ja nicht mehr an die Steuerung übermittelt werden können.

Ein Beispiel für ein derartiges System ist ein System zur Steuerung einer Roboteranlage, wobei der Zugang zur Roboteranlage durch eine Lichtschranke als Sensor überwacht wird. Dabei ist der Lichtschrankensensor am Ort der Roboteranlage an eine Eingangsbaugruppe angeschlossen, die wiederum über eine Kommunikationsverbindung an die Steuerung, welche direkt oder indirekt den Betrieb der Roboteranlage steuert, angeschlossen ist. Die Eingangsbaugruppe und der Lichtschrankensensor sind dabei in einer sogenannten lokalen Sicherheitszone, dem Arbeitsbereich der Roboteranlage, angeordnet, während die Steuerung räumlich davon entfernt angeordnet ist. In vielen Fällen ist die räumliche Entfernung zwischen der Steuerung und der lokalen Sicherheitszone relativ groß, insbesondere dann, wenn es sich um eine Steuerung, bspw. für eine Roboterstraße mit einer Vielzahl von Roboteranlagen handelt, so dass die Steuerung auch in einem anderen Gebäudeabschnitt oder gar in einem anderen Gebäude als die lokale Sicherheitszone angeordnet sein kann. Wenn nun in der Steuerung eine Sicherheitsanforderung ausgelöst wird, sei es, weil eine Person durch die Lichtschranke tritt ("tatsächliche Störung") und ein entsprechendes Sensor-Statussignal erzeugt, oder sei es, weil die Kommunikation zwischen der Eingangsbaugruppe und der Steuerung gestört ist ("Scheinstörung"), bewirkt diese Sicherheitsanforderung, dass die Roboteranlage außer Betrieb genommen wird, so dass in der lokalen Sicherheitszone keine oder keine weitere Gefährdung besteht. Für eine anschließende Wiederinbetriebnahme des Systems ist aus Sicherheitsgründen vorab zumindest die manuelle Betätigung eines lokalen Quittierungsmittels (z.B. Schalter oder Taster) in der lokalen Sicherheitszone erforderlich. Damit wird sichergestellt, dass durch Inaugenscheinnahme am Ort der lokalen Sicherheitszone festgestellt wird, ob die die Sicherheitsanforderung auslösende Störung tatsächlich nicht mehr besteht. Dabei ist das lokale Quittierungsmittel mit der Eingangsbaugruppe und/oder der Steuerung verbunden, so dass die Betätigung des Quittierungsmittels elektronisch entweder indirekt über die Eingangsbaugruppe oder direkt an die Steuerung übermittelt werden kann. Das Ablaufprogramm in der Steuerung stellt dann sicher, dass eine Wiederinbetriebnahme des Systems - in diesem Fall die Wiederinbetriebnahme der Roboteranlage - nur dann erfolgt, wenn das lokale Quittierungsmittel betätigt wurde. Optional kann es vorgesehen sein, dass es für eine Wiederinbetriebnahme erforderlich ist, zusätzlich ein sogenanntes globales Quittierungsmittel manuell zu betätigen, das als Teil der Steuerung ausgebildet ist oder in der Nähe der Steuerung angeordnet und mit dieser verbunden ist.

Da auch im Falle einer Kommunikationsstörung zwischen der Eingangsbaugruppe und der Steuerung eine Sicherheitsanforderung ausgelöst wird, ist es für eine Wiederinbetriebnahme des Systems erforderlich, lange Fußwege bis zur lokalen Sicherheitszone zurückzulegen, um das lokale Quittierungsmittel zu betätigen. Dies bedeutet, dass die Wiederinbetriebnahme auch im Falle einer "Scheinstörung" mit einem relativ hohen Aufwand verbunden ist.

Aus der DE 43 31 666 C2 ist eine Anordnung zum Steuern von Einrichtungen wie Motoren etc. bekannt, die Überwachungssensoren aufweist, die bei kritischen Betriebszuständen ansprechen. Dabei weist die Anordnung ein Blockiersystem auf, das die Einrichtung still setzen kann, so dass diese nicht mehr betriebsbereit ist, wobei das Blockiersystem ausgelöst wird, wenn ein Überwachungssensor anspricht ("tatsächliche Störung") oder wenn eine Störung an den Leitungen des Überwachungssensors vorliegt ("Scheinstörung"). Gemäß DE 43 31 666 C2 ist es vorgesehen, dass die Bedienperson die zuvor blockierte Einrichtung durch die Betätigung eines Schalters (Inaktivierungsschalter, der eine Inaktivierung des Blockiersystems bewirkt) für eine vorbestimmte Zeitdauer wieder in Betrieb genommen werden kann. Nach Ablauf der vorbestimmten Zeitdauer wird die Einrichtung über das Blockiersystem dann automatisch wieder außer Betrieb genommen.

Aus der US2004/0215354 A1 ist ein System mit einer zentralen Steuerung bekannt, an die über eine Kommunikationsverbindung zwei oder mehr Anschlussbaugruppen in Form einer Eingangsbaugruppe oder Ausgangsbaugruppe angeschlossen sind, wobei an eine jeweilige Anschlussbaugruppe wiederum Sensoren oder Aktoren angeschlossen sind.

Dabei empfängt die Anschlussbaugruppe sicherheitsrelevante Statusinformationen. Die Anschlussbaugruppe sendet dann auf Anforderung durch die Steuerung eine Sicherheitsantwort ("safety response") an die Steuereinheit. Darüber hinaus wird das Ergebnis der Sicherheitsüberprüfung auch in der Anschlussbaugruppe gespeichert.

Falls die Steuerung die "safety response" im Falle einer Kommunikationsstörung zwischen der Anschlussbaugruppe und der Steuerung nicht empfangen kann, wird diese nach dem Wiederaufbau der Kommunikation (Wegfall/Behebung der Kommunikationsstörung) gesendet. Dies ist möglich, da diese ja abgespeichert war.

Aufgabe der Erfindung ist es, eine Wiederinbetriebnahme des gattungsgemäßen Systems nach einer Kommunikationsstörung zwischen einer Anschlussbaugruppe und der Steuerung in einfacher und dennoch sicherer Weise zu realisieren.

Diese Aufgabe wird gelöst durch die Merkmale des Anspruchs 1. Die sich daran anschließenden abhängigen Ansprüche beziehen sich auf vorteilhafte Ausführungsformen der Erfindung.

Erfindungsgemäß überwacht die Anschlussbaugruppe auch im Falle einer Kommunikationsstörung zwischen der Anschlussbaugruppe und der Steuerung den Status des angeschlossenen Sensors oder Aktors, wobei die Anschlussbaugruppe das Auftreten einer sicherheitsrelevanten Statusinformation während der Dauer der Kommunikationsstörung als Status-Memory-Wert speichert. Nach einem Wiederaufbau der zuvor gestörten Kommunikation erhält die Steuerung den Status-Memory-Wert als Signal von der Anschlussbaugruppe. Dabei entscheidet die Steuerung anhand des Status-Memory-Wertes, ob eine Wiederinbetriebnahme des Systems
a) nur durch eine vorhergehende Betätigung des globalen Quittierungsmittels ohne eine Betätigung des lokalen Quittierungsmittels durchgeführt wird,
   oder
b) nur durch eine vorhergehende Betätigung zumindest des lokalen Quittierungsmittels durchgeführt wird.

Falls die Anschlussbaugruppe während der Kommunikationsstörung eine sicherheitsrelevante Statusinformation vom angeschlossenen Sensor oder Aktor detektiert bzw. ermittelt hat, speichert die Anschlussbaugruppe einen entsprechenden Status-Memory-Wert ab. Durch Auslesen dieser Status-Memory-Wertes wird die Steuerung nun nachträglich darüber informiert, dass während der Phase der Kommunikationsstörung, in der die Steuerung quasi blind für die Statusinformationen des Sensors bzw. Aktors war, zumindest einmal eine sicherheitsrelevante Statusinformation vorlag. In diesem Fall gestattet die Steuerung die Wiederinbetriebnahme des Systems erst dann, wenn zuvor das manuell betätigbare Quittierungsmittel in der lokalen Sicherheitszone betätigt wurde.

Falls jedoch die Anschlussbaugruppe während der Kommunikationsstörung keine sicherheitsrelevante Statusinformation vom angeschlossenen Sensor oder Aktor detektiert bzw. ermittelt hat, speichert die Anschlussbaugruppe keinen Status-Memory-Wert oder einen im Unterschied zum vorgenannten Fall entsprechend anderen Wert ab. In diesem Fall, wo keine tatsächliche Störung in der lokalen Sicherheitszone vorlag, gestattet die Steuerung die Wiederinbetriebnahme des Systems ohne dass zuvor in aufwendiger Weise das lokale Quittierungsmittel betätigt werden muss. Eine manuelle Betätigung des globalen Quittierungsmittels, das an oder zumindest in der Nähe der zentralen Steuerung angeordnet ist, kann jedoch auch in diesem Fall optional vorgesehen sein.

Mit der erfindungsgemäßen Idee wird ein intelligentes, automatisches Wiederinbetriebnahme-Management realisiert, wobei nur dann eine aufwendige manuelle Betätigung des lokalen Quittierungsmittels notwendig ist, wenn auch davon auszugehen ist, dass auch tatsächlich eine Störung in der lokalen Sicherheitszone vorlag. Lokale Sicherheitszonen sind dabei solche Bereiche um eine Anlage oder Maschine herum oder um Teile der Anlage oder Teile der Maschine herum, in denen mindestens eine Anschlussbaugruppe mit einem daran angeschlossenen Sensor oder Aktor angeordnet ist, wobei eine sicherheitsrelevante Statusinformation dieses Sensors oder Aktors eine sicherheitskritische Situation für Personen und/oder für die Anlage/Maschine oder deren Teile in diesem Bereich signalisiert.

Die Erfindung wird nachstehend anhand von Ausführungsbeispielen und anhand von Figuren näher erläutert. Dabei zeigt:
- Figur 1: ein Blockschaltbild des erfindungsgemäßen Systems,
- Figur 2: ein Flussdiagramm für einen systemgemäßen Ablauf,
- Figur 3: ein Anwendungsbeispiel für das erfindungsgemäße System,

Fig. 4A/B Zeitdiagramme für den Sensor-Status und den Status-Memory-Wert.

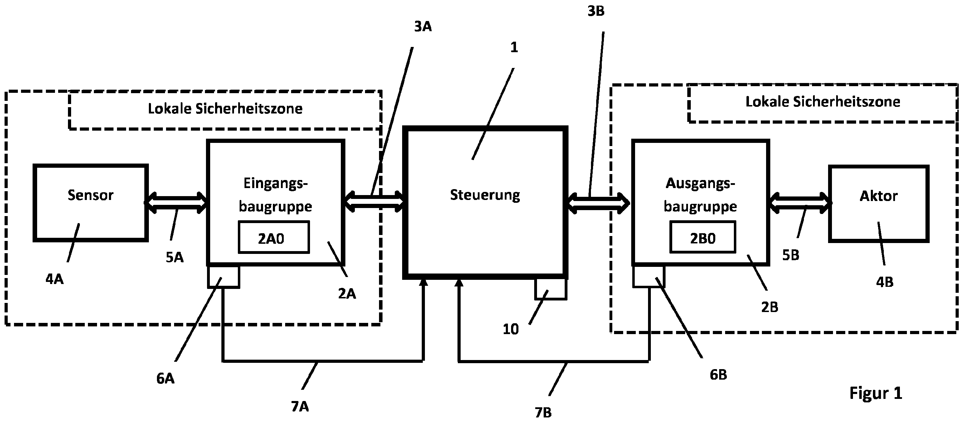

In Figur 1 ist ein Blockschaltbild des Systems dargestellt. An eine zentrale Steuerung (1) ist über eine Kommunikationsverbindung (3A) eine erste Anschlussbaugruppe (2A) in Form einer Eingangsbaugruppe (2A) angeschlossen und über eine weitere Kommunikationsverbindung (3B) eine zweite Anschlussbaugruppe (2B) in Form einer Ausgangsbaugruppe (2B) angeschlossen. Die beiden Kommunikationsverbindungen (3a, 3B) sind vorzugsweise Teil ein Feldbusses (z.B. Profibus, Profinet, Interbus oder Industrial Ethernet). Dabei ist an die Eingangsbaugruppe (2A) ein Sensor (4A) und an die Ausgangsbaugruppe (2B) ein Aktor (4B) angeschlossen. Die Anschlussverbindung (5A, 5B) zwischen den Sensoren (4A) bzw. Aktoren (4B) und den zugehörigen Anschlussbaugruppe (2A, 2B) kann auf verschiedenste Weise realisiert sein, beispielsweise über eine Zweidrahtleitung oder auch über einen Feldbus. Bei den Sensoren und Aktoren handelt es sich um Teile der zu steuernden Anlagen oder Maschinen.

Die Anschlussbaugruppen (2A, 2B) dienen dabei bekanntermaßen im Wesentlichen der Aufbereitung und/oder Wandlung der Sensor- bzw. Aktorsignale für eine Datenübertragung über die Kommunikationsverbindung (3A, 3B) an die Steuerung (1). Dabei überwachen die Anschlussbaugruppen (2A,2B) insbesondere auch den Status des angeschlossenen Sensors (4A) bzw. Aktors (4B), wobei beim Vorliegen einer sicherheitsrelevanten Statusinformation von der Anschlussbaugruppe (2A,2B) ein Signal an die Steuerung (1) gesendet wird, welches in der Steuerung (1) dann eine Sicherheitsanforderung auslöst, die wiederum z.B. ein Stilllegung (Außerbetriebnahme) der zu steuernden Anlage oder Maschine bewirkt. Eine solche Sicherheitsanforderung wird allerdings nicht nur dann ausgelöst, wenn eine sicherheitsrelevante Statusinformation am Sensor (4A) bzw. Aktor (4B) anliegt, sondern auch dann, wenn eine Störung der Kommunikation (z.B. Verbindungsunterbrechung) zwischen einer Anschlussbaugruppe (2A, 2B) und der Steuerung (1) vorliegt. Die Anschlussbaugruppen (2A, 2B) mit den daran angeschlossenen Sensor bzw. Aktor sind jeweils in einer lokalen Sicherheitszone angeordnet, die räumlich von der Steuerung (1) angeordnet ist.

In den lokalen Sicherheitszonen ist jeweils ein manuell betätigbares lokales Quittierungsmittel (6A, 6B) vorhanden. Um die Betätigung des Quittierungsmittels (6A, 6B) der Steuerung (1) mitzuteilen, ist das Quittierungsmittel (6A, 6B) in einer Variante direkt mit der Steuerung (1) über Leitungen (7A, 7B) oder per Funk verbunden. In einer alternativen Variante ist das lokale Quittierungsmitte (6A, 6B) mit der Anschlussbaugruppe (2A, 2B) verbunden, so dass die Information über die Betätigung des lokalen Quittierungsmittels über die Anschlussbaugruppe an die Steuerung weitergeleitet wird. In einer weiteren Variante ist es vorgesehen, dass das lokale Quittierungsmittel (6A, 6B) sowohl mit der Anschlussbaugruppe (2A, 2B) wie auch direkt mit der Steuerung (1) verbunden ist, so dass die Information über die Betätigung des lokalen Quittierungsmittels die Steuerung sowohl direkt als auch indirekt über die Anschlussbaugruppe erreichen kann.

Darüber hinaus ist ein manuell betätigbares globales Quittierungsmittel (10) vorhanden, welches als Teil der Steuerung (1) ausgebildet ist oder in der Nähe der Steuerung (1) angeordnet ist und mit dieser verbunden ist. Dieses Quittierungsmittel (10) wird als global bezeichnet, da es bezogen auf das System global nur einmal vorhanden ist, während die lokalen Quittierungsmittel (6A, 6B) in den - in der Regel mehrfach vorhandenen - dezentralen lokalen Sicherheitszonen angeordnet sind. In diesem Sinne kann die Steuerung (1) auch als globale (zentrale) Steuerung bezeichnet werden.

Für die Verwirklichung der erfindungsmäßen Grundidee ist es unerheblich, ob es nur eine lokale Sicherheitszone gibt oder ob es mehrere lokale Sicherheitszonen gibt oder ob es in einer lokalen Sicherheitszone mehrere erfindungsgemäße Anschlussbaugruppen gibt. Für die Verwirklichung der erfindungsgemäßen Grundidee ebenfalls unerheblich ist es, wenn es neben der erfindungsgemäßen Steuerung noch eine übergeordnete Groß-Steuerung gibt.

Die Anschlussbaugruppen (2A, 2B) überwachen nun auch im Falle einer Kommunikationsstörung zwischen der Anschlussbaugruppe (2A, 2B) und der Steuerung (1) den Status des angeschlossenen Sensors (4A) bzw. Aktors (4B), wobei die Anschlussbaugruppen das Auftreten einer sicherheitsrelevanten Statusinformation während der Dauer der Kommunikationsstörung als Status-Memory-Wert speichert. Nach einem Wiederaufbau der zuvor gestörten Kommunikation erhält die Steuerung (1) den Status-Memory-Wert als Signal von der Anschlussbaugruppe (2A, 2B). Dabei entscheidet die Steuerung (1) anhand des Status-Memory-Wertes, ob eine Wiederinbetriebnahme des Systems a) nur durch eine vorhergehende Betätigung des globalen Quittierungsmittels (10) ohne eine Betätigung des lokalen Quittierungsmittels (6A, 6B) durchgeführt wird, oder b) nur bei einer vorhergehenden Betätigung zumindest des lokalen Quittierungsmittels (6A, 6B) durchgeführt wird.

Die erfindungsgemäßen Anschlussbaugruppen (2A, 2B) weisen eine Auswerte- und Speichereinheit (2A0, 2B0) auf, um den Status der angeschlossenen Sensoren bzw. Aktoren auszuwerten und einen entsprechenden Status-Memory-Wert abzuspeichern. Dabei kann die Auswerte- und Speichereinheit als eine integrale Einheit ausgebildet sein oder als zwei separate Einheiten ausgebildet sein.

Um die Auswertung der Sensor- bzw. Aktorausgänge auch im Falle einer Kommunikationsstörung zwischen der Anschlussbaugruppe (2A, 2B) und der Steuerung (1) zu gewährleisten, sind Mittel vorgesehen, die die Anschlussbaugruppe auch im Falle einer Kommunikationsstörung mit Spannung versorgen. Diese Mittel können ein separater Spannungsanschluss für die Anschlussbaugruppe oder eine in der Anschlussbaugruppe integrierte Batterie sein.

Das lokale und das globale Quittierungsmittel (6A, 6B, 10) kann als Schalter oder Taster ausgebildet sein. Das globale Quittierungsmittel (10) kann auch als eine über eine Mensch-Maschine-Schnittstelle (z.B. Touch-Screen) beantwortbare Abfrage in einem Ablaufprogramm in der Steuerung (1) ausgestaltet sein.

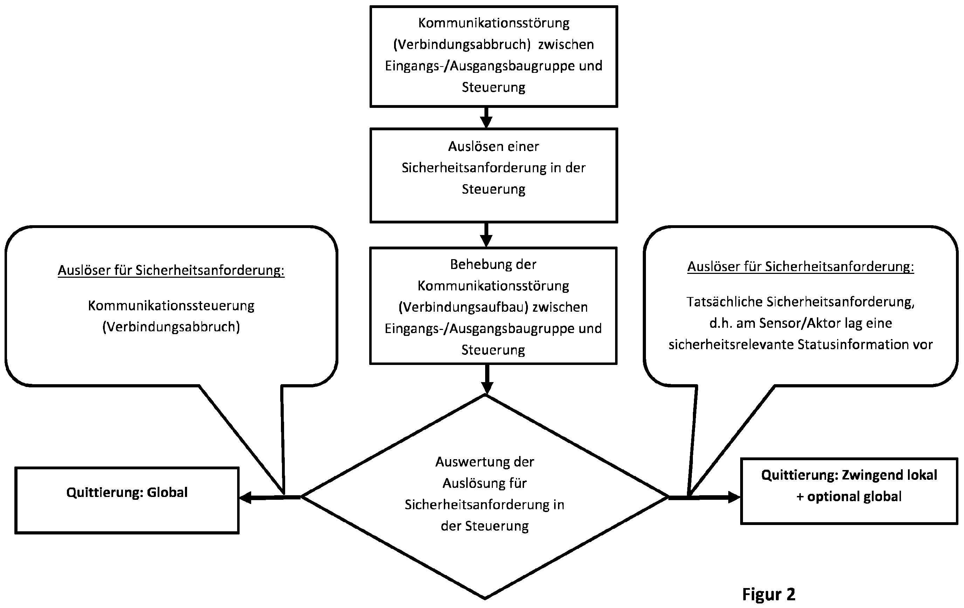

Der systemgemäße Ablauf nach dem Auslösen einer Sicherheitsanforderung ist in Figur 2 anhand eine Flussdiagramms dargestellt.

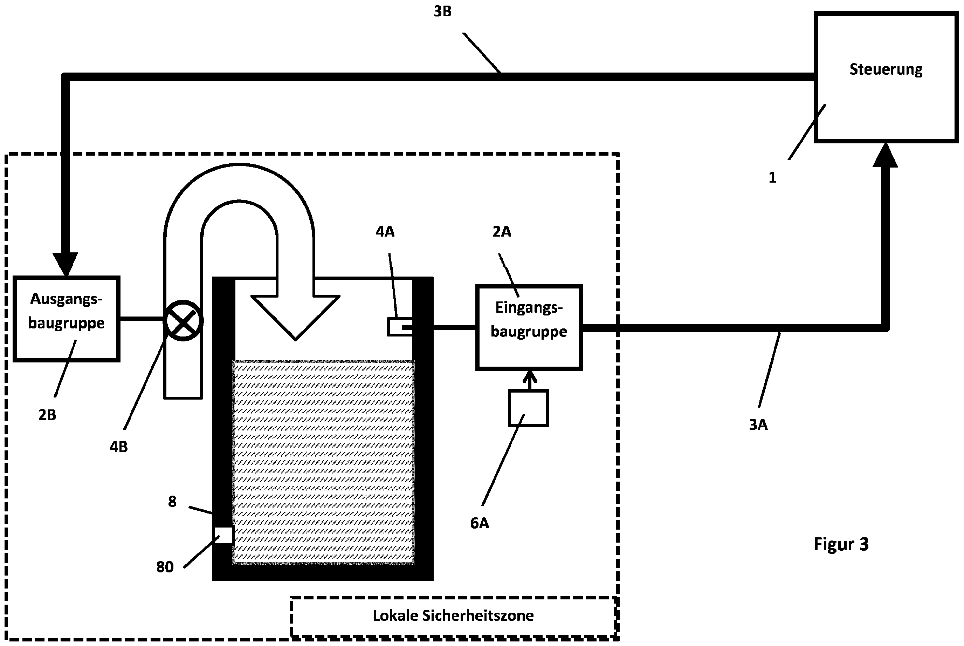

In Figur 3 ist Anwendungsbeispiel für das erfindungsgemäße System dargestellt. Im dargestellten Beispiel wird durch das erfindungsgemäße System eine sichere Steuerung einer Befüllanlage bewirkt. Dabei wird ein Behälter (8) über eine Pumpe (4B) als Aktor mit einer gefährlichen Flüssigkeit befüllt und die Flüssigkeit aus dem Vorratsbehälter (8) über eine Entnahmeleitung (80) für eine Weiterverwendung automatisch entnommen wird. Dabei ist Befüllung über die Pumpe (4B) und die Entnahme so geregelt, dass es eigentlich nicht zu einem Überlaufen des Behälters (= Störung) kommt. Um jedoch ein Überlaufen des Behälters sicher zu verhindern, ist ein Füllstandssensor (4A) als Überlaufwarnmelder vorgesehen. Dabei ist die Pumpe (4B) an die systemgemäße Ausgangsbaugruppe (2B) und der Füllstandssensor (4A) an eine systemgemäße Eingangsbaugruppe (2A) angeschlossen. Bevor es zum einem Überlaufen kommen kann, erzeugt der Füllstandssensor (4A) eine sicherheitsrelevante Statusinformation, die über die Eingangsbaugruppe (2A) an die Steuerung (1) gemeldet wird, die dann eine Sicherheitsanforderung auslöst, die zum Abschalten der Pumpe (4B) führt. Im vorliegenden Fall ist eine Wiederinbetriebnahme des Systems, d.h. insbesondere ein Wiederanlaufen der Pumpe (4B) nur dann möglich, wenn zuvor der lokale Quittierungstaster (6A) in der lokalen Sicherheitszone betätigt wurde, da dabei immer auch eine Inaugenscheinnahme des Behälters und seines Füllstandes verbunden ist.

Wie vorstehend erwähnt würde auch im Falle einer Kommunikationsstörung zwischen der Eingangsbaugruppe (2A) und der Steuerung (1) eine die Pumpe (4B) abschaltende Sicherheitsanforderung ausgelöst. Allerdings würde in diesem Fall das intelligente, automatische Wiederinbetriebnahme-Management zum Tragen kommen, wobei nur dann eine aufwendige manuelle Betätigung des lokalen Quittierungstaster (6A) notwendig ist, wenn auch davon auszugehen ist, dass auch tatsächlich eine Störung in der lokalen Sicherheitszone, d.h. ein Überlaufwarnsignal des Füllstandssensors (4A) vorlag. Durch die Inaugenscheinnahme vor der lokalen Quittierung kann der Bediener feststellen, ob der Füllstand im Behälter wieder auf ein unkritisches Maß gesunken ist.

Auch eine Überwachung von Aktoren (hier der Pumpe) auf sicherheitsrelevante Statusinformationen (beispielsweise Überhitzungssignal) während einer Kommunikationsstörung zwischen der Ausgangsbaugruppe und der Steuerung durch die angeschlossene Ausgangsbaugruppe ist - wie im Falle der Eingangsbaugruppe und dem angeschlossenen Füllstandssensor - sinnvoll und vorgesehen.

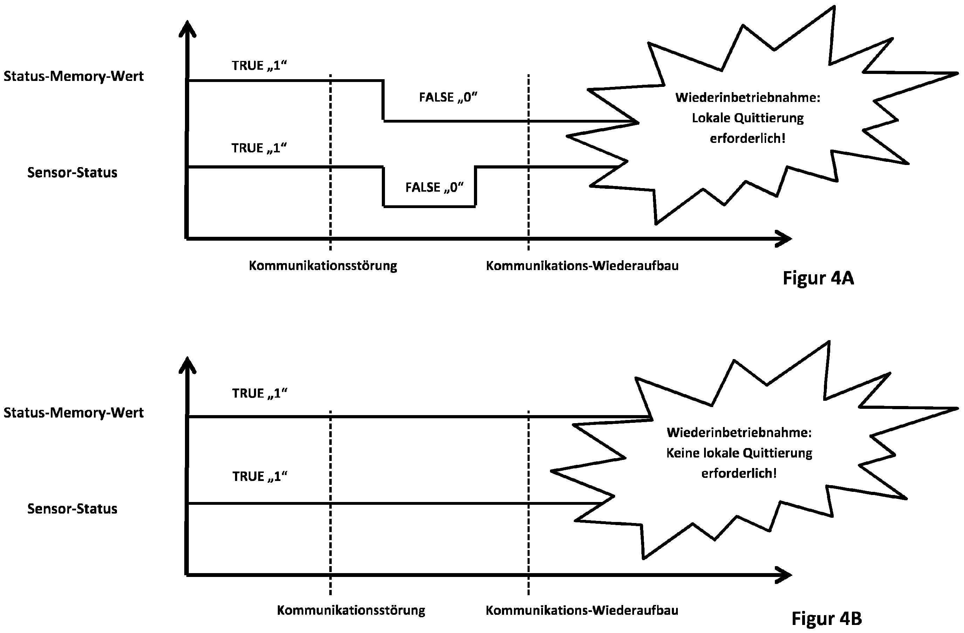

In Figur 4A ist ein Zeitdiagramm für den Sensor-Status eines an eine Eingangsbaugruppe angeschlossenen Sensors sowie für den Status-Memory-Wert in der Eingangsbaugruppe dargestellt. Solange der Sensor-Status "TRUE" oder logisch "1" ist oder einen High-Pegel aufweist, handelt es sich nicht um eine sicherheitsrelevante Statusinformation. Wenn der Sensor-Status "FALSE" oder logisch "0" ist oder einen Low-Pegel aufweist, liegt eine sicherheitsrelevante Statusinformation vor, die bei intakter Kommunikationsverbindung zwischen Eingangsbaugruppe und Steuerung in der Steuerung eine Sicherheitsanforderung auslöst. Wie in Figur 4A zu erkennen ist, ändert sich der Sensor-Status während der Kommunikationsstörung von "TRUE" zu "FALSE" und kehrt dann noch während der Kommunikationsstörung zu "TRUE" zurück, so dass der Sensor-Status beim Wiederaufbau der der Kommunikation der Wert "TRUE" hat. Dadurch, dass der Sensor-Status jedoch von der Eingangsbaugruppe auch während der Kommunikationsstörung ausgewertet und ein entsprechender Status-Memory-Wert abgespeichert wird, wird die Steuerung darüber informiert, dass während der Kommunikationsstörung am Sensor zumindest einmal eine sicherheitsrelevante Statusinformation vorlag. Wenn der Status-Memory-Wert aufgrund einer sicherheitsrelevanten Statusinformation den Wert "FALSE" angenommen hat, bleibt dieser Wert auch dann gespeichert, wenn der Sensor-Status sich wieder in Richtung "TRUE" geändert hat. Der Status-Memory-Wert wird erst nach einer Wiederinbetriebnahme des Systems auf "TRUE" zurückgesetzt. In dem in Figur 4A dargestellten Fall ist eine Wiederinbetriebnahme des Systems nur bei vorheriger lokaler Quittierung möglich.

In Figur 4B ist der Fall dargestellt, wo während einer Kommunikationsstörung keine sicherheitsrelevante Statusinformation am Sensor vorlag. In diesem Fall ist eine Wiederinbetriebnahme des Systems ohne eine lokale Quittierung möglich.

### Bezugszeichenliste:

- 1: Steuerung
- 10: Globales Quittierungsmittel an der Steuerung
- 2A: Eingangsbaugruppe
- 2A0: Auswerte- und Speichereinheit in der Eingangsbaugruppe
- 2B: Ausgangsbaugruppe
- 2B0: Auswerte- und Speichereinheit in der Ausgangsbaugruppe
- 3A: Kommunikationsverbindung zwischen Eingangsbaugruppe und Steuerung
- 3B: Kommunikationsverbindung zwischen Ausgangsbaugruppe und Steuerung
- 4A: Sensor
- 4B: Aktor
- 5A: Anschlussverbindung zwischen Sensor und Eingangsbaugruppe
- 5B: Anschlussverbindung zwischen Aktor und Ausgangsbaugruppe
- 6A+6B: Lokale Quittierungsmittel in den lokalen Sicherheitszonen
- 7A+7B: Verbindungen zwischen den lokalen Quittierungsmitteln und der Steuerung
- 8: Behälter
- 80: Entnahmeleitung im Behälter

## Patentansprüche

1. System zur sicheren Steuerung von Anlagen, Maschinen oder dergleichen,
- wobei das System folgende Komponenten aufweist:
▪ eine Steuerung (1),
▪ mindestens eine über eine Kommunikationsverbindung (3A, 3B) an die Steuerung (1) angeschlossene Anschlussbaugruppe (2A, 2B) in Form einer Eingangsbaugruppe oder Ausgangsbaugruppe,
▪ mindestens einen über eine Kommunikationsverbindung (5A, 5B) an die Anschlussbaugruppe (2A, 2B) angeschlossenen Sensor (4A) oder Aktor (4B),
- wobei die Anschlussbaugruppe (2A, 2B) mit dem angeschlossenen Sensor (4A) oder Aktor (4B) innerhalb einer lokalen Sicherheitszone angeordnet ist, die räumlich von der Steuerung (1) entfernt ist,
- wobei die Anschlussbaugruppe (2A, 2B) den Status des angeschlossenen Sensors (4A) oder Aktors (4B) überwacht und bei mindestens einer sicherheitsrelevanten Statusinformation ein Signal an die Steuerung (1) sendet, welches in der Steuerung eine Sicherheitsanforderung auslöst,
- wobei eine Störung der Kommunikation zwischen der Anschlussbaugruppe (2A, 2B) und der Steuerung (1) ebenfalls eine Sicherheitsanforderung in der Steuerung (1) auslöst,
- die Anschlussbaugruppe (2A, 2B) auch im Falle einer Kommunikationsstörung den Status des angeschlossenen Sensors (4A) oder Aktors (4B) überwacht,
- die Anschlussbaugruppe (2A, 2B) das Auftreten einer sicherheitsrelevanten Statusinformation während der Dauer der Kommunikationsstörung als Status-Memory-Wert speichert,
- als Status-Memory-Wert ein erster Wert (FALSE, "0") abgespeichert wird, wenn während der Dauer der Kommunikationsstörung eine sicherheitsrelevante Statusinformation aufgetreten ist,
- als Status-Memory-Wert ein zweiter, vom ersten verschiedener Wert (TRUE, "1") abgespeichert wird, wenn während der Dauer der Kommunikationsstörung keine sicherheitsrelevante Statusinformation aufgetreten ist,
- die Steuerung (1) nach einem Wiederaufbau der Kommunikation den Status-Memory-Wert als Signal von der Anschlussbaugruppe (2A, 2B) erhält,
**dadurch gekennzeichnet, dass**
- ein manuell betätigbares lokales Quittierungsmittel (6A, 6B) vorhanden ist, welches in der lokalen Sicherheitszone angeordnet ist und mit der Anschlussbaugruppe (2A, 2B) und/oder der Steuerung (1) verbunden ist,
- ein manuell betätigbares globales Quittierungsmittel (10) vorhanden ist, welches als Teil der Steuerung (1) ausgebildet ist oder in der Nähe der Steuerung (1) angeordnet und mit dieser verbunden ist,
- die Steuerung (1) nach dem Wiederaufbau der Kommunikation anhand des Status-Memory-Wertes über die Art der Wiederinbetriebnahme entscheidet, wobei
a) dann, wenn der Status-Memory-Wert den zweiten Wert (TRUE, "1") aufweist, eine Wiederinbetriebnahme nur durch eine vorhergehende Betätigung des globalen Quittierungsmittels (10) ohne eine Betätigung des lokalen Quittierungsmittels durchgeführt wird,
b) dann, wenn der Status-Memory-Wert den ersten Wert (FALSE, "0") aufweist, eine Wiederinbetriebnahme nur durch eine vorhergehende Betätigung zumindest des lokalen Quittierungsmittels (6A, 6B) durchgeführt wird.

2. System nach Anspruch 1, **dadurch gekennzeichnet, dass** das System Mittel aufweist, die die Anschlussbaugruppe (2A, 2B) permanent, auch im Falle einer Kommunikationsstörung, mit Spannung versorgt.

3. System nach Anspruch 1 oder 2, **dadurch gekennzeichnet, dass** die Kommunikationsverbindung zwischen der Anschlussbaugruppe (2A, 2B) und der Steuerung (1) ein Feldbus ist.

4. System nach Anspruch 3, **dadurch gekennzeichnet, dass** der Status-Memory-Wert in Form einer logischen "0" oder einer logischen "1" übertragen wird.

5. System nach Anspruch 1 oder 2, **dadurch gekennzeichnet, dass** der der Status-Memory-Wert in Form eines analogen Minimalwerts oder Maximalwerts übertragen wird.

6. System nach einem der vorhergehenden Ansprüche, **dadurch gekennzeichnet, dass** das lokale Quittierungsmittel (6A, 6B) ein Schalter oder Taster ist.

7. System nach einem der vorhergehenden Ansprüche, **dadurch gekennzeichnet, dass** das globale Quittierungsmittel (10) ein Schalter oder Taster ist.

8. System nach einem der Ansprüche 1 bis 6, **dadurch gekennzeichnet, dass** das globale Quittierungsmittel (10) eine über eine Mensch-Maschine-Schnittstelle beantwortbare Abfrage in einem Ablaufprogramm in der Steuerung (1) ist.

9. System nach einem der vorstehenden Ansprüche, **dadurch gekennzeichnet, dass** die Anschlussbaugruppe (2A,2B) eine Auswerte- und Speichereinheit (2A0, 2B0) aufweist, um den Status der angeschlossenen Sensoren (4A) oder Aktoren (4B) auszuwerten und einen entsprechenden Status-Memory-Wert abzuspeichern.

## Claims

1. A system for safe control of facilities, machines or the like,
- the system comprising the following components:
▪ a controller (1);
▪ at least one connection assembly (2A, 2B) in the form of an input assembly or output assembly, connected to the controller (1) via a communication link (3A, 3B);
▪ at least one sensor (4A) or actuator (4B), connected to the connection assembly (2A, 2B) via a communication link (5A, 5B);
- wherein the connection assembly (2A, 2B) including the connected sensor (4A) or actuator (4B) is located within a local safety zone that is remote from the controller (1) with regard to space;
- wherein the connection assembly (2A, 2B) monitors the status of the connected sensor (4A) or actuator (4B) and, in the case of at least one safety-relevant status information, transmits a signal to the controller (1), which triggers a safety request in the controller;
- wherein a disturbance of communication between the connection assembly (2A, 2B) and the controller (1) also triggers a safety request in the controller (1);
- wherein the connection assembly (2A, 2B) monitors the status of the connected sensor (4A) or actuator (4B) even in the event of a communication disturbance;
- wherein the connection assembly (2A, 2B) stores the occurrence of a safety-relevant status information during the duration of the communication disturbance as a status memory value;
- wherein a first value (FALSE, "0") is stored as a status memory value if a safety-relevant status information has occurred during the duration of the communication disturbance;
- a second value (TRUE, "1") different from the first one is stored as the status memory value if no safety-relevant status information has occurred during the duration of the communication disturbance;
- wherein the controller (1) receives the status memory value as a signal from the connection module (2A, 2B) after reestablishment of communication;
**characterized in that**
- a manually operable local acknowledgment means (6A, 6B) is provided, which is located within the local safety zone and is connected to the connection assembly (2A, 2B) and/or to the controller (1);
- a manually operable global acknowledgment means (10) is provided, which is implemented as part of the controller (1) or is arranged near the controller (1) and is connected thereto;
- after reestablishment of communication, the controller (1) decides about the type of restart based on the status memory value; wherein
a) if the status memory value has the second value (TRUE, "1"), restart is performed only through previous actuation of the global acknowledgment means (10), without actuation of the local acknowledgment means;
b) if the status memory value has the first value (FALSE, "0"), restart is performed only by previous actuation of at least the local acknowledgment means (6A, 6B).

2. The system according to claim 1, **characterized in that** the system comprises means which ensure permanent power supply to the connection assembly (2A, 2B), even in the event of a communication disturbance.

3. The system according to claim 1 or 2, **characterized in that** the communication link between the connection assembly (2A, 2B) and the controller (1) is a field bus.

4. The system according to claim 3, **characterized in that** the status memory value is transmitted in the form of a logic "0" or a logic "1".

5. The system according to claim 1 or 2, **characterized in that** the status memory value is transmitted in the form of an analog minimum value or maximum value.

6. The system according to any one of the preceding claims, **characterized in that** the local acknowledgment means (6A, 6B) is a switch or button.

7. The system according to any one of the preceding claims, **characterized in that** the global acknowledgment means (10) is a switch or button.

8. The system according to any one of claims 1 to 6, **characterized in that** the global acknowledgment means (10) is a query in a sequence program in the controller (1), which can be answered via a human-machine interface.

9. The system according to any one of the preceding claims, **characterized in that** the connection assembly (2A, 2B) has an evaluation and memory unit (2A0, 2B0) for evaluating the status of the connected sensors (4A) or actuators (4B) and for storing a corresponding status memory value.

## Revendications

1. Système pour la commande fiable d'installations, de machines ou similaires,
- où le système comprend les composants suivants :
▪ une commande (1),
▪ au moins un module de raccordement (2A, 2B) raccordé à la commande (1) par l'intermédiaire d'une liaison de communication (3A, 3B) et se présentant sous la forme d'un module d'entrée ou d'un module de sortie,
▪ au moins un capteur (4A) ou actionneur (4B) raccordé au module de raccordement (2A, 2B) par l'intermédiaire d'une liaison de communication (5A, 5B),
- dans lequel le module de raccordement (2A, 2B) auquel est raccordé le capteur (4A) ou l'actionneur (4B) est agencé à l'intérieur d'une zone de sécurité locale, qui est éloignée dans l'espace de la commande (1),
- dans lequel le module de raccordement (2A, 2B) surveille le statut du capteur (4A) ou de l'actionneur (4B) raccordé et, dans le cas d'au moins une information d'état relative à la sécurité, envoie un signal à la commande (1), lequel déclenche une exigence de sécurité dans la commande,
- dans lequel une défaillance de la communication entre le module de raccordement (2A, 2B) et la commande (1) déclenche également une exigence de sécurité dans la commande (1),
- le module de raccordement (2A, 2B), y compris dans le cas d'une défaillance de communication, surveille l'état du capteur (4A) ou de l'actionneur (4B) raccordé,
- le module de raccordement (2A, 2B) met en mémoire l'apparition d'une information d'état relative à la sécurité pendant la durée de la défaillance de communication en tant que valeur de mémoire d'état,
- une première valeur (FAUX, « 0 ») est mise en mémoire en tant que valeur de mémoire d'état, lorsqu'une information d'état relative à la sécurité est apparue pendant la durée de la défaillance de communication,
- une deuxième valeur (VRAI, « 1 »), différente de la première, est mise en mémoire en tant que valeur de mémoire d'état, lorsqu'aucune information d'état relative à la sécurité n'est apparue pendant la durée de la défaillance de communication,
- la commande (1), une fois la communication rétablie, reçoit du module de raccordement (2A, 2B) la valeur de mémoire d'état en tant que signal,
**caractérisé en ce que**
- un moyen de confirmation d'ordre local (6A, 6B) pouvant être actionné manuellement, lequel est agencé dans la zone de sécurité locale et est relié au module de raccordement (2A, 2B) et/ou à la commande (1), est présent
- un moyen de confirmation d'ordre global (10) pouvant être actionné manuellement, lequel est réalisé en tant que partie de la commande (1) ou est agencé à proximité de la commande (1) et est relié à celle-ci, est présent
- la commande (1), une fois la communication rétablie, décide du type de remise en service sur la base de la valeur de mémoire d'état, où
a) lorsque la valeur de mémoire d'état présente la deuxième valeur (VRAI, « 1 »), une remise en service n'est alors effectuée que par un actionnement préalable du moyen de confirmation d'ordre global (10) sans actionnement du moyen de confirmation d'ordre local,
b) lorsque la valeur de mémoire d'état présente la première valeur (FAUX, « 0 »), une remise en service n'est alors effectuée que par un actionnement préalable au moins du moyen de confirmation d'ordre local (6A, 6B).

2. Système selon la revendication 1, le système étant **caractérisé en ce qu'**il présente des moyens qui alimentent le module de raccordement (2A, 2B) en tension en permanence, y compris dans le cas d'une défaillance de communication.

3. Système selon la revendication 1 ou 2, **caractérisé en ce que** la liaison de communication entre le module de raccordement (2A, 2B) et la commande (1) est un bus de terrain.

4. Système selon la revendication 3, **caractérisé en ce que** la valeur de mémoire d'état est transmise sous la forme d'un « 0 » logique ou d'un « 1 » logique.

5. Système selon la revendication 1 ou 2, **caractérisé en ce que** la valeur de mémoire d'état est transmise sous la forme d'une valeur minimale ou d'une valeur maximale analogique.

6. Système selon l'une quelconque des revendications précédentes, **caractérisé en ce que** le moyen de confirmation d'ordre local (6A, 6B) est un commutateur ou un bouton-poussoir.

7. Système selon l'une quelconque des revendications précédentes, **caractérisé en ce que** le moyen de confirmation d'ordre global (10) est un commutateur ou un bouton-poussoir.

8. Système selon l'une quelconque des revendications 1 à 6, **caractérisé en ce que** le moyen de confirmation d'ordre global (10) est une requête dans un programme séquentiel dans la commande (1), à laquelle il est possible de répondre par l'intermédiaire d'une interface homme-machine.

9. Système selon l'une quelconque des revendications précédentes, **caractérisé en ce que** le module de raccordement (2A, 2B) présente une unité d'évaluation et de mise en mémoire (2A0, 2B0), afin d'évaluer l'état des capteurs (4A) ou des actionneurs (4B) raccordés et de mettre en mémoire une valeur de mémoire d'état correspondante.
